# EUROPÄISCHE PATENTSCHRIFT

(11) **EP 1 095 100 B1**
(45) Veröffentlichungstag und Bekanntmachung des Hinweises auf die Patenterteilung: **03.09.2003**
(21) Anmeldenummer: 99931060.0
(22) Anmeldetag: 12.06.1999
(51) Int. Cl.: C08K 5/5399, C08L 69/00, C08K 13/02

(54) **FLAMMWIDRIGE POLYCARBONAT/ABS-FORMMASSEN**
FLAME RESISTANT POLYCARBONATE/ABS PLASTIC MOLDING MATERIALS
MATIERES MOULEES EN POLYCARBONATE/PLASTIQUE ABS ININFLAMMABLES

(30) Priorität: 26.06.1998 DE 19828536
(43) Veröffentlichungstag der Anmeldung: 02.05.2001
(73) Patentinhaber: BAYER AG, 51368 Leverkusen (DE)
(72) Erfinder: ECKEL, Thomas, D-41540 Dormagen (DE); ZOBEL, Michael, D-40547 Düsseldorf (DE); WITTMANN, Dieter, D-51375 Leverkusen (DE)
(86) Internationale Anmeldenummer: EP9904059
(87) Internationale Veröffentlichungsnummer: WO00000541

(56) Entgegenhaltungen:
- EP-A- 0 417 839
- EP-A- 0 761 746
- EP-A- 0 791 634
- WO-A-97/40092
- WO-A-99/07782
- WO-A-99/07791

## Beschreibung

Die vorliegende Erfindung betrifft Polycarbonat/ABS-Formmassen, enthaltend Phosphazene und anorganische Nanopartikel, die einen ausgezeichneten Flammschutz und sehr gute mechanische Eigenschaften aufweisen.

In DE-A 196 16 968 werden polymerisierbare Phosphazenderivate, Verfahren zu deren Herstellung und deren Verwendung als aushärtbare Bindemittel für Lacke, Beschichtungen, Füllmittel, Spachtelmassen, Klebstoffe, Formteile oder Folien beschrieben.

In WO 97/40092 werden flammgeschützte Formmassen aus thermoplastischen Polymeren und unsubstituierten Phosphazenen vom Typ PNₙ₋ₓH_{1-y} beschrieben.

EP-A 728 811 beschreibt eine thermoplastische Mischung bestehend aus aromatischem Polycarbonat, Pfropfcopolymer, Copolymer und Phosphazenen, welche gute Flammschutzeigenschaften, Schlagzähigkeit und Wärmeformbeständigkeit aufweisen.

Eine Kombination aus Phosphazenen und anorganischen Nanopartikeln wird weder in WO 97/400 92 noch in EP-A 728 811 beschrieben.

Aufgabe der vorliegenden Erfindung ist die Bereitstellung von Polycarbonat/ABS-Formmassen mit einer ausgezeichneten Flammfestigkeit, hoher Wärmeformbeständigkeit und ausgezeichneten mechanischen Eigenschaften wie Kerbschlagzähigkeit, Bindenahtfestigkeit und Spannungsrißbeständigkeit. Diese Eigenschaftskombination wird besonders bei Anwendungen im Bereich Datentechnik wie etwa für Gehäuse von, Monitoren, Druckern oder Kopierer gefordert.

Es wurde nun gefunden, daß PC/ABS-Formmassen, die Phosphazene in Kombination mit anorganischen Nanopartikeln enthalten, die gewünschten Eigenschaften aufweisen.

Gegenstand der Erfindung sind daher thermoplastische Formmassen enthaltend Polycarbonat und/oder Polyestercarbonat, Pfropfpolymerisat, Phosphazene und anorganisches Pulver mit einem durchschnittlichen Teilchendurchmesser kleiner gleich 200 nm, welche weitere Polymere, beispielsweise thermoplastische Vinyl(co)polymerisate und/oder Polyalkylenterephthalate und gegebenenfalls andere Zusatzstoffe enthalten können.

Gegenstand der Erfindung sind vorzugsweise thermoplastische Fonnmassen enthaltend
A) 40 bis 99, vorzugsweise 60 bis 98,5 Gew.-Teile aromatisches Polycarbonat und/oder Polyestercarbonat
B) 0,5 bis 60, vorzugsweise 1 bis 40, insbesondere 2 bis 25 Gew.-Teile Pfropfpolymerisat von
   B.1) 5 bis 95, vorzugsweise 30 bis 80 Gew.-% eines oder mehrerer Vinylmonomeren auf
   B.2) 95 bis 5, vorzugsweise 20 bis 70 Gew.% einer oder mehrerer Pfropfgrundlagen mit einer Glasumwandlungstemperatur <10°C, vorzugsweise <0°C. besonders bevorzugt < -20°C,
C) 0 bis 45, vorzugsweise 0 bis 30, besonders bevorzugt 2 bis 25 Gew.-Teile mindestens eines thermoplastischen Polymers, ausgewählt aus der Gruppe der Vinyl(co)polymerisate und Polyalkylenterephthalate,
D) 0,1 bis 50, vorzugsweise 2 bis 35, insbesondere 5 bis 25 Gew.-Teile mindestens einer Komponente, ausgewählt aus der Gruppe der Phosphazene der Formeln 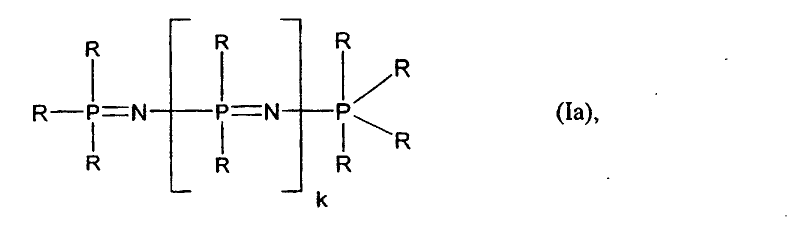 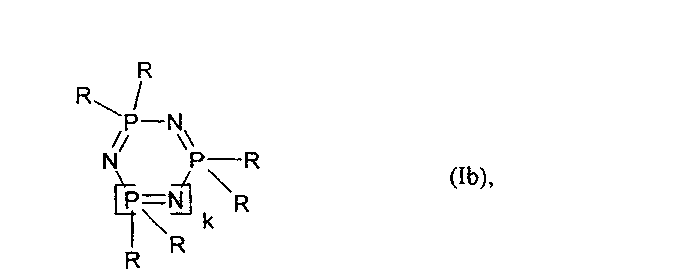 worin
   - R: jeweils gleich oder verschieden ist und für Amino, jeweils gegebenenfalls halogeniertes, vorzugsweise mit Fluor halogeniertes C₁- bis C₈-Alkyl, oder C₁-C₈-Alkoxy, jeweils gegebenenfalls durch Alkyl, vorzugsweise C₁-C₄-Alkyl, und/oder Halogen, vorzugsweise Chlor und/oder Brom, substituiertes C₅- bis C₆-Cycloalkyl, C₆- bis C₂₀-Aryl, vorzugsweise Phenoxy, Naphthyloxy, oder C₇- bis C₁₂-Aralkyl vorzugsweise Phenyl-C₁-C₄-alkyl, steht,
   - k: für 0 oder eine Zahl von 1 bis 15, vorzugsweise für eine Zahl von 1 bis 10 steht,
E) 0,5 bis 40, vorzugsweise 1 bis 25, besonders bevorzugt 2 bis 15 Gew.-Teile feinteiliges anorganisches Pulver mit einem durchschnittlichen Teilchendurchmesser von kleiner gleich 200 nm, und
F) 0 bis 5 Gew.-Teile, vorzugsweise 0,15 bis 1 Gew.-Teil, besonders bevorzugt 0,1 bis 0,5 Gew.-Teile eines fluorierten Polyolefins.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z. B. DE-OS 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielseise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (I) 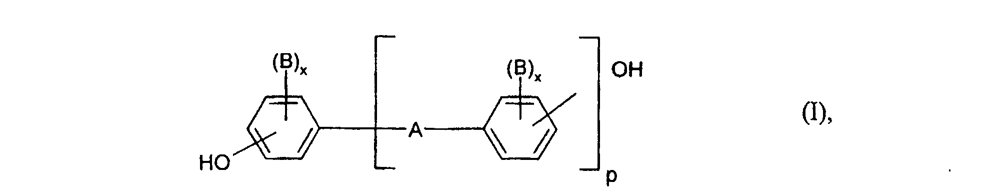 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können,
oder ein Rest der Formel (II) oder (III) 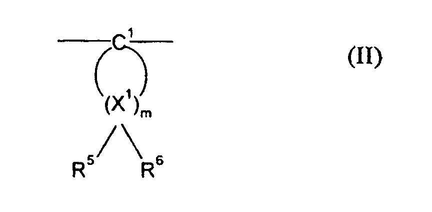 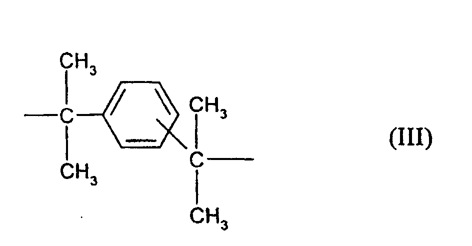
- B: jeweils C₁-C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁-C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, daß an mindestens einen Atom X¹, R⁵ und R⁶ gleichzeitig Alkyl sind.

Bevorzugte Diphenole sind Hydrochinon, Resocin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kembromierte und/oder kemchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon sowie deren di- und tetrabromierten oder chlorierten Derviate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.% (bezogen auf die Gesamtmenge an einzusetzenden Diphenolen) Polydiorganosiloxane mit Hydroxy-aryloxy-Endgruppen eingesetzt werden. Diese sind bekannt (s. beispielseise US-Patent 3 419 634) bzw. nach literaturbekannten Verfahren herstellbar. Die Herstellung Polydiorganosiloxanhaltiger Copolycarbonate wird z. B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere 2,2-Bis(3,5-dibrom-4-hydroxyphenyl)-propan.

Aromatische Dicarbonsäuredihalogenide zur Herstellung von aromatischen Polyestercarbonate sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen oder durch Halogenatome substituiert sein können, sowie aliphatische C₂-C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen aufeingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,22 bis 1,3 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch untereinander eingesetzt werden.

### Komponente B

Die Komponente B umfaßt ein oder mehrere Pfropfpolymerisate von
B.1 5 bis 95, vorzugsweise 30 bis 80 Gew.-%, wenigstens eines Vinylmonomeren auf
B.2 95 bis 5, vorzugsweise 70 bis 20 Gew.-% einer oder mehrerer Pfropfgrundlagen mit Glasübergangstemperaturen < 10°C, vorzugsweise < 0°C, besonders bevorzugt < -20°C.

Die Pfropfgrundlage B,2 hat im allgemeinen eine mittlere Teilchengröße (d₅₀-Wert) von 0,05 bis 5 µm, vorzugsweise 0,10 bis 0,5 µm, besonders bevorzugt 0,20 bis 0.40 µm.

Monomere B. 1 sind vorzugsweise Gemische aus
B.1.1 50 bis 99 Gew.-Teilen Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie z.B. Methylmethacrylat, Ethylmethacrylat) und
B.1.2 1 bis 50 Gew.-Teilen Vinylcyanide (ungesättigte Nitrile wie Acrylnitril und Methacrylnitril) und/oder (Meth)Acrylsäure-(C₁-C₈)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen B.2 sind Dienkautschuke (z. B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, daß die Glasübergangstemperatur der Komponente B.2 unterhalb <10°C, vorzugsweise <0°C, besonders bevorzugt < -10°C liegt.

Besonders bevorzugt ist reiner Polybutadienkautschuk.

Besonders bevorzugte Polymerisate B sind z.B. ABS-Polymerisate (Emulsions-, Masse- und Suspensions-ABS), wie sie z. B. in der DE-OS 2 035 390 (=US-PS 3 644 574) oder in der DE-OS 2 248 242 (=GB-PS 1 409 275) bzw. in Ullmann, Enzyklopädie der Technischen Chemie, Bd. 19 (1980), S. 280 ff. beschrieben sind. Der Gelanteil der Pfropfgrundlage B.2 beträgt mindestens 30 Gew.-%, vorzugsweise mindestens 40 Gew.-% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsionspolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.2.

Bei cyclischen vernetzenden Monomeren mit mindestens 3 ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z. B. Acrylnitril, Styrol, α-Methylstyrol, Acrylamide. Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

### Komponente C

Die Komponente C umfaßt ein oder mehrere thermoplastische Vinyl (co)polymerisate C. 1 und/oder Polyalkylenterephthalate C.2.

Geeignet sind als Vinyl(co)Polymerisate C.1 Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
C.1.1 50 bis 99, vorzugsweise 60 bis 80 Gew.-Teilen Vinylaromaten und/oder kernsubstituierten Vinylaromaten wie beispielsweise Styrol, α-Methylstyrol, p-Methylstyrol, p-Chlorstyrol) und/oder Methacrylsäure-(C₁-C₈)-Alkylester wie z.B. Methylmethacrylat, Ethylmethacrylat), und
C.1.2 1 bis 50, vorzugsweise 20 bis 40 Gew.-Teilen Vinylcyanide (ungesättigte Nitrile) wie Acrylnitril und Methacrylnitril und/oder (Meth)Acrylsäure-(C₁-Cg)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate C.1 sind harzartig, thermoplastisch und kautschukfrei.

Besonders bevorzugt ist das Copolymerisat aus C.1.1 Styrol und C.1.2 Acrylnitril.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate gemäß Komponente C.1 besitzen vorzugsweise Molekulargewichte M_{w} (Gewichtsmittel, ermittelt durch Lichtstreuung oder Sedimentation) zwischen 15 000 und 200 000.

Die Polyalkylenterephthalate der Komponente C.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexan-diessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloalipahtische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Komponente D

Phosphazene gemäß Komponente D welche gemäß der vorliegenden Erfindung eingesetzt werden, sind lineare Phosphazene gemäß Formel (Ia) und cyclische Phosphazene gemäß Formel (Ib) 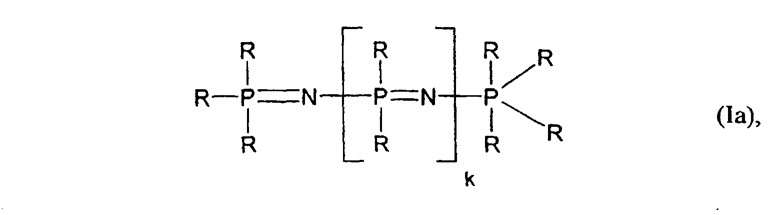 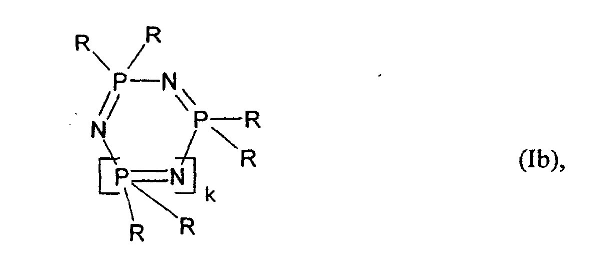 wobei R und k die oben angegebene Bedeutung haben.

Beispielhaft seien genannt:
Propoxyphosphazen, Phenoxyphosphazen, Methylphenoxyphosphazen, Aminophosphazen und Fluoralkylphosphazene.

Bevorzugt ist Phenoxyphosphazen.

Die Phosphazene können allein oder als Mischung eingesetzt werden. Der Rest R kann immer gleich sein oder 2 oder mehr Reste in den Formeln (Ia) und (Ib) können verschieden sein.

Die Phosphazene und deren Herstellung sind beispielsweise in EP-A 728 811, DE-A 1 961 668 und WO 97/40092 beschrieben.

### Komponente E

Die Komponente E umfaßt feinstteilige anorganische Pulver.

Die erfindungsgemäß zum Einsatz kommenden feinstteiligen anorganischen Pulver E bestehen vorzugsweise aus wenigstens einer polaren Verbindung von einem oder mehreren Metallen der 1. bis 5. Hauptgruppe oder 1. bis 8. Nebengruppe des Periodensystems, bevorzugt der 2. bis 5. Hauptgruppe oder 4. bis 8. Nebengruppe, besonders bevorzugt der 3. bis 5. Hauptgruppe oder 4. bis 8. Nebengruppe mit wenigstens einem Element ausgewählt aus Sauerstoff, Wasserstoff, Schwefel, Phosphor, Bor, Kohlenstoff, Stickstoff oder Silicium.

Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phosphite oder Phosphonate.

Bevorzugt bestehen die feinstteiligen anorganischen Pulver aus Oxiden, Phosphaten, Hydroxiden, vorzugsweise aus TiO₂, SiO₂, SnO₂, ZnO, ZnS, Böhmit, ZrO₂, Al₂O₃, Aluminiumphosphate, Eisenoxide, ferner TiN, WC, AlO(OH), Sb₂O₃, Eisenoxide, NaSO₄, Vanadiumoxide, Zinkborat, Silicate wie Al-Silikate, Mg-Silikate, ein-, zwei-, dreidimensionale Silikate. Mischungen und dotierte Verbindungen sind ebenfalls verwendbar.

Desweiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen.

Besonders bevorzugt sind hydrathaltige Aluminiumoxide, z.B. Böhmit oder TiO₂.

Die durchschnittlichen Teilchendurchmesser der Nanopartikel sind kleiner gleich 200 nm, bevorzugt kleiner gleich 150 nm, insbesondere 1 bis 100 nm.

Teilchengröße und Teilchendurchmesser bedeutet immer den mittleren Teilchendurchmesser d₅₀, ermittelt durch Ultrazentrifugenmessungen nach W. Scholtan et al., Kolloid-Z. und Z. Polymere 250 (1972), S. 782-796.

Das anorganische Pulver wird in Mengen von 0,5 bis 40, vorzugsweise 1 bis 25, besonders bevorzugt von 2 bis 15 Gew.-%, bezogen auf das thermoplastische Material in die thermoplastische Formmasse eingearbeitet.

Die anorganischen Verbindungen können als Pulver, Pasten, Sole Dispersionen oder Suspensionen vorliegen. Durch Ausfällen können aus Dispersionen, Sole oder Suspensionen Pulver erhalten werden.

Die Pulver können nach üblichen Verfahren in die thermoplastischen Formmassen eingearbeitet werden, beispielsweise durch direktes Kneten oder Extrudieren von Formmassen und den feinstteiligen anorganischen Pulvern. Bevorzugte Verfahren stellen die Herstellung eines Masterbatch, z.B. in Flammschutzadditiven und wenigstens einer Komponente der erfindungsgemäßen Formmassen in Monomeren oder Lösungsmitteln, oder die Cofällung von einer thermoplastischen Komponente und den feinstteiligen anorganischen Pulvern, z.B. durch Cofällung einer wäßrigen Emulsion und den feinstteiligen anorganischen Pulvern dar, gegebenenfalls in Form von Dispersionen, Suspensionen, Pasten oder Solen der feinstteiligen anorganischen Materialien.

### Komponente F

Die fluorierten Polyolefine F sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser d₅₀ von 0,05 bis 1 000, vorzugsweise 0,08 bis 20 µm. Im allgemeinen haben die fluorierten Polyolefine F eine Dichte von 1,2 bis 2,3 g/cm³. Bevorzugte fluorierte Polyolefine F sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, Nr. 10 A, Oktober 1970, Mc Graw-Hill, Inc., New York, Seite 134 und 774; "Modern Plastica Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielseise Natrium-, Kalium- oder Ammoniumperoxidisulfat bei Drucken von 7 bis 71 kg/cm² und bei Temperaturen von 0 bis 200°C, vorzugsweise bei Temperaturen von 20 bis 100°C. (Nähere Einzelheiten s. z. B. US-Patent 2 393 967). Je nach Einsatzform kann die Dichte dieser Materialien zwischen 1,2 und 2,3 g/cm³, die mittlere Teilchengröße zwischen 0,5 und 1 000 µm liegen.

Erfindungsgemäß bevorzugte fluorierte Polyolefine F sind Tetrafluorethylenpolymerisate mit mittleren Teilchendurchmesser von 0,05 bis 20 µm, vorzugsweise 0,08 bis 10 µm, und eine Dichte von 1,2 bis 1,9 g/cm³ und werden vorzugsweise in Form einer koagulierten Mischung von Emulsionen der Tetrafluorethylenpolymerisate F mit Emulsionen der Pfropfpolymerisate B eingesetzt

Geeignete, in Pulverform einsetzbare fluorierte Polyolefine F sind Tetrafluorethylenpolymerisate mit mittleren Teilchendurchmesser von 100 bis 1 000 µm und Dichten von 2,0 g/cm³ bis 2,3 g/cm³.

Zur Herstellung einer koagulierten Mischung aus B und F wird zuerst eine wäßrige Emulsion (Latex) eines Pfropfpolymerisates B mit einer feinteiligen Emulsion cines Tetrafluorethylenpolymerisates F vermischt; geeignete Tetrafluorethylenpolymerisat-Emulsionen besitzen üblicherweise Feststoffgehalte von 30 bis 70 Gew-.%, insbesondere von 50 bis 60 Gew.-%, vorzugsweise von 30 bis 35 Gew.-%.

Die Mengenangabe bei der Beschreibung der Komponente B kann den Anteil des Pfropfpolymerisats für die koagulierte Mischung aus Pfropfpolymerisat und fluoriertem Polyolefinen einschließen.

In der Emulsionsmischung liegt das Gleichgewichtsverhältnis Pfropfpolymerisat B zum Tetrafluorethylenpolymerisat F bei 95:5 bis 60:40. Anschließend wird die Emulsionsmischung in bekannter Wiese koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handelsübliche Produkte und werden beispielsweise von der Firma DuPont als Teflon® 30 N angeboten.

Die erfindungsgemäßen Formmassen können weingstens eines der üblichen Additive, wie Gleit- und Entformungsmittel, Nukleiermittel, Anmtistatika, Stabilisatoren sowie Farbstoffe und Pigmente enthalten.

Die erfindungsgemäßen Formmassen können bis zu 35 Gew.-%, bezogen auf die Gesamt-Formmasse, eines weiteren, gegebenenfalls synergistisch wirkenden Flammschutzmittels enthalten. Beispielhaft werden als weitere Flammschutzmittel organische Phosphorverbindungen wie beispielsweise beschrieben in EP-A 363 608, EP-A 345 522 und EP-A 640 655, organische Halogenverbindugen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-Hydroxid, anorganische Verbindungen wie Antimonoxide, Bariummetaborat, Hydroxoantimonat, Zirkonoxid, Zirkonhydroxid, Molybdenoxid, Ammoniummolybdat, Zinkborat, Ammoniumborat, Bariummetaborat, Talk, Silikat, Siliziumdioxid und Zinnoxid sowie Siloxanverbindungen genannt.

Die erfindungsgemäßen Formmassen enthaltend die Komponenten A bis F und gegebenenfalls weitere bekannte Zusätze wie Stabilisatoren, Farbstoffen, Pigmenten, Gleit- und Entformungsmitteln, Nukleiermittel sowie Antistatika, werden hergestellt, indem man die jeweiligen Bestandteile in bekannter Weise vermischt und bei Temperatuern von 200°C bis 300°C in üblichen Aggregaten wie Innenknetern, Extrudern und Doppelwellenschnecken schmelzcompoundiert und schmelzextrudiert, wobei die Komponente F vorzugsweise in Form der bereits erwähnten koagulierten Mischung eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen thermoplastischen Formmassen eignen sich aufgrund ihrer ausgezeichneten Flammfestigkeit und Wärmeformbeständigkeit sowie ihren guten Eigenschaften wie Bindenahtfestigkeit und ESC-Verhalten (Spannungsrißbeständigkeit) zur Herstellung von Formkörpern jeglicher Art, insbesondere solchen mit erhöhten Anforderungen an Bruchbeständigkeit.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art, z.B. für Haushaltsgeräte wie Saftpressen, Kaffeemaschinen, Mixer, für Büromaschinen, wie Monitore, Drucker, Kopierer oder Abdeckplatten für den Bausektor und Teile für den Kfz-Sektor. Sie sind außerdem auf dem Gebiet der Elektrotechnik einsetzbar, weil sie sehr gute elektrische Eigenschaften haben.

Weiterhin können die erfindungsgemäßen Formmassen beispielsweise zur Herstellung von folgenden Formkörpern bzw. Formteilen verwendet werden:
Innenausbauteile für Schinenfahrzeuge, Radkappen, Gehäuse von Kleintransformatoren enthaltenden Elektrogeräten, Gehäuse für Geräte zur Informationsverbreitung und -Übermittlung, Gehäuse und Verkleidung für medizinische Zwecke, Massagegeräte und Gehäuse dafür, Spielfahrzeuge für Kinder, Flächige Wandelemente, Gehäuse für Sicherheitseinrichtungen, Heckspoiler, Wärmeisolierte Transportbehältnisse, Vorrichtung zur Haltung oder Versorgung von Kleintieren, Formteile für Sanitär- und Badeausrüstungen, Abdeckgitter für Lufteröffnungen, Formteile für Garten- und Gerätehäuser, Gehäuse für Gartengeräte.

Eine weitere Form der Verarbeitung ist die Herstellung von Formkörpern durch Tiefziehen aus vorher hergestellten Platten oder Folien.

Ein weiterer Gegenstand der vorliegenden Erfindung ist daher auch die Verwendung der erfindungsgemäßen Formmassen zur Herstellung von Formkörpern jeglicher Art, vorzugsweise der oben genannten, sowie die Formkörper aus den erfindungsgemäßen Formmassen.

### Beispiele

### Komponente A

Lineares Polycarbonat auf Basis Bisphenol A mit einer relativen Lösungsviskosität von 1,252, gemessen in CH₂Cl₂ als Lösungsmittel bei 25°C und einer Konzentration von 0,5 g/100 ml.

### Komponente B

Pfropfpolymerisat von 40 Gew.-Teilen eines Copolymerisats aus Styrol und Acrylnitril im Verhältnis von 73:27 auf 60 Gew.-Teile teilchenförmigen vernetzten Polybutadienkautschuk (mittlerer Teilchendurchmesser d₅₀ = 0,28 µm), hergestellt durch Emulsionspolymerisation.

### Komponente C

Styrol/Acrylnitril-Copolymerisat mit einem Styrol/Acrylnitril-Gewichtsverhältnis von 72:28 und einer Grenzviskosität von 0,55 dl/g (Messung in Dimethylformamid bei 20°C).

### Komponente D

Phenoxyphosphazen der Formel 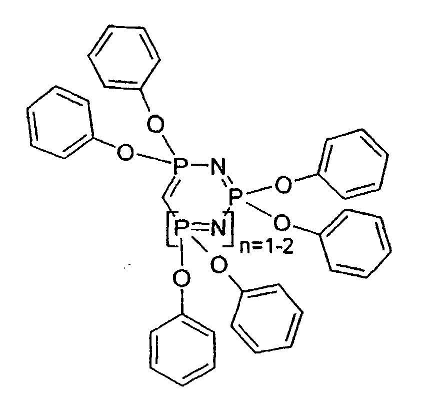 Handelsprodukt: P-3800 der Firma Nippon Soda CoLtd, Japan

### Komponente E

Pural® 200, ein Aluminiumoxidhydroxid (Fa. Condea, Hamburg, Deutschland), mittlere Teilchengröße ca. 50 nm.

### Komponente F

Tetrafluorethylenpolymerisat als koagulierte Mischung aus einer SAN-Pfropfpolymerisat-Emulsion gemäß o.g. Komponente B in Wasser und einer Tetrafluorethylenpolymerisat-Emulsion in Wasser. Das Gewichtsverhältnis Pfropfpolymerisat B zum Tetrafluorethylenpolymerisat E in der Mischung ist 90 Gew.-% zu 10 Gew.-%. Die Tetrafluorethylenpolyermisat-Emulsion besitzt einen Feststoffgehalt von 60 Gew.-%, der mittlere Teilchendurchmesser liegt zwischen 0,05 und 0,5 µm. Die SAN-Pfropfpolymerisat-Emulsion besitzt einen Feststoffgehalt von 34 Gew.-% und einen mittleren Latexteilchendurchmesser von d₅₀ = 0,28 µm.

### Herstellung von F

Die Emulsion des Tetrafluorethylenpolymerisats (Teflon 30 N der Fa. DuPont) wird mit der Emulsion des SAN-Pfropfpolymerisats B vermischt und mit 1,8 Gew.-%, bezogen auf Polymerfeststoff, phenolischer Antioxidantien stabilisiert. Bei 85 bis 95°C wird die Mischung mit einer wäßrigen Lösung von MgSO₄ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

### Herstellung und Prüfung der erfindungsgemäßen Formmassen

Das Mischen der Komponenten erfolgt auf einem 3-I-Innenkneter. Die Formkörper werden auf einer Spritzgießmaschine Typ Arburg 270 E bei 260°C hergestellt.

Die Bestimmung der Wärmeformbeständigkeit nach Vicat B erfolgt gemäß DIN 53 460 (ISO 306) an Stäben der Abmessung 80 x 10 x 4 mm.

Die Bestimmung der Kerbschlagzähigkeit aₖ wird gemäß ISO 180/1 A durchgeführt.

Zur Ermittlung der Bindenahtfestigkeit wird die Schlagzähigkeit nach DIN 53 453 an der Bindenaht von beidseitig ausgespritzten Prüfkörpern (Verarbeitungstemperatur: 260°C) der Dimension 170 x 10 x 4 mm gemessen.

Das Brandverhalten der Proben wurde nach UL-Subj. 94 V an Stäben der Abmessung 127 x 12,7 x 1,6 mm gemessen, hergestellt auf einer Spritzgußmaschine bei 260°C.

Der UL 94 V-Test wird wie folgt duchgeführt:
Substanzproben werden zu Stäben der Abmessungen 127 x 12,7 x 1,6 mm geformt. Die Stäbe werden vertikal so montiert, daß die Unterseite des Probekörpers sich 305 mm über einen Streifen Verbandstoff befindet. Jeder Probestab wird einzeln mittels zweier aufeinanderfolgender Zündvorgänge von 10 s Dauer entzündet, die Brenneigenschaften nach jedem Zündvorgang werden beobachtet und danach die Probe bewertet. Zum Entzünden der Probe wird ein Bunsenbrenner mit einer 100 mm (3,8 inch) hohen blauen Flamme von Erdgas mit einer Wärmeeinheit von 3,73 x 10⁴ kJ/m³ (1000 BTU per cubic foot) benutzt.

Die UL 94 V-O-Klassifizierung umfaßt die nachstehend beschriebenen Eigenschaften von Materialien, die gemäß der UL 94 V-Vorschrift geprüft werden. Die Formmassen in dieser Klasse enthalten keine Proben, die länger als 10 s nach jeder Einwirkung der Testflamme brennen; sie zeigen keine Gesamtflammzeit von mehr als 50 s bei der zweimaligen Flammeinwirkung auf jeden Probesatz; sie enthalten keine Proben, die vollständig bis hinauf zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 s nach Entfernen der Testflamme glimmen.

Andere UL 94-Klassifizierungen bezeichnen Proben, die weniger flammwidrig oder weniger selbstverlöschend sind, weil sie flammende Tropfen oder Teilchen abgeben. Diese Klassifizierungen werden mit UL 94 V-1 und V-2 bezeichnet. N.B. heißt "nicht bestanden" und ist die Klassifizierung von Proben, die eine Nachbrennzeit von ≥ 30 s aufweisen.

Das Spannungsrißverhalten (ESC-Verhalten) wurde an Stäben der Abmessung 80 x 10 x 4 mm, Verarbeitungstemperatur 260°C, untersucht. Als Testmedium wurde eine Mischung aus 60 Vol.-% Toluol und 40 Vol.-% Isopropanol verwendet. Die Probekörper wurden mittels einer Kreisbogenschablone vorgedehnt (Vordehnung in Prozent) und bei Raumtemperatur im Testmedium gelagert. Das Spannungsrißverhalten wurde über die Rißbildung bzw. den Bruch in Abhängigkeit von der Vordehnung im Testmedium beurteilt.

Eine Zusammenstellung der Eigenschaften der erfindungsgemäßen Formmassen ist in der nachfolgenden Tabelle 1 gegeben:

Durch Verwendung der Kombination aus Phosphazen und feinstteiligem anorganischen Pulver werden Formmassen mit erhöhter Wärmeformbeständigkeit erhalten, die sich durch sehr gute mechanische Eigenschaften wie Kerbschlagzähigkeit, Spannungsrißbeständigkeit und Bindenahtfestigkeit auszeichnen. Überraschenderweise wird der gute Flammschutz der erfindungsgemäßen Formmassen bei deutlich reduzierten Mengen an Phosphazen erreicht.

**Tabelle:**

| Formmassen und ihre Eigenschaften | | | |
|---|---|---|---|
| | 1 (Vgl) | 2 | 3 |
| Komponenten [Gew.-Tle] | | | |
| A | 66,7 | 66,7 | 66,7 |
| B | 7,3 | 7,3 | 7,3 |
| C | 9,4 | 9,4 | 9,4 |
| D | 15,0 | 13,0 | 11,0 |
| E | - | 1,0 | 1,0 |
| F | 4,2 | 4,2 | 4,2 |

| Eigenschaften | | | |
|---|---|---|---|
| aₖ [kJ/m²] | 56 | 58 | 59 |
| Vivat B 120 [°C] | 101 | 104 | 110 |
| aₙ (Bindenaht) [kJ/m²] | 15,8 | 17,8 | 17,8 |

| ESC-Verhalten | | | |
|---|---|---|---|
| Bruch bei εx [%] | 1,6 | 1,8 | 2,0 |
| UL 94 V 1,6 mm | V-0 | V-0 | V-0 |

## Patentansprüche

1. Thermoplastische Formmassen enthaltend Polycarbonat und/oder Polyestercarbonat, Pfropfpolymerisat, Phosphazene und anorganisches Pulver mit einem durchschnittlichen Teilchendurchmesser kleiner gleich 200 nm.

2. Thermoplastische Formmassen gemäß Anspruch 1 enthaltend
A) 40 bis 99 Gew.-Teile aromatisches Polycarbonat und/oder Polyestercarbonat,
B) 0,5 bis 60 Gew.-Teile Pfropfpolymerisat von
B.1) 5 bis 95 Gew.-% eines oder mehrererr Vinylmonomeren auf
B.2) 95 bis 5 Gew.-% einer oder mehrerer Pfropfgrundlagen mit einer Glasumwandlungstemperatur < 10°C,
C) 0 bis 45 Gew.-Teile mindestens eines thermoplastischen Polymers, ausgewählt aus der Gruppe der Vinyl(co)polymerisate und Polyalkylenterephthalate,
D) 0,1 bis 50 Gew.-Teile mindestens einer Komponente, ausgewählt aus der Gruppe der Phosphazene der Formeln 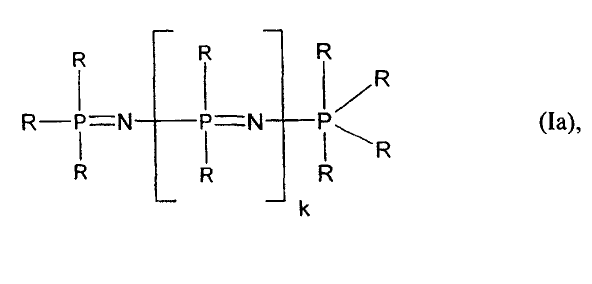 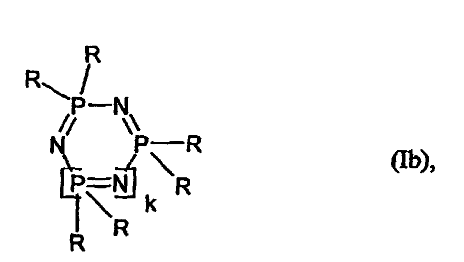 worin
R jeweils gleich oder verschieden ist und für Amino, jeweils gegebenenfalls halogeniertes C₁- bis C₈-Alkyl oder C₁-C₈-Alkoxy, jeweils gegebenenfalls durch Alky, 1 und/oder Halogen substituiertes C₅- bis C₆-Cycloalkyl, C₆- bis C₂₀-Aryl, Phenoxy, Naphtyloxy oder C₇- bis C₁₂-Aralkyl steht,
k für 0 oder eine Zahl von 1 bis 15 steht,
E) 0,5 bis 40 Gew.-Teile feinteiliges anorganisches Pulver mit einem durchschnittlichen Teilchendurchmesser von kleiner gleich 200 nm, und
F) 0 bis 5 Gew.-Teile eines fluorierten Polyolefins.

3. Formmassen gemäß Anspruch 1 und 2, enthaltend
60 bis 98,5 Gew.-Teile A,
1 bis 40 Gew.-Teile B,
0 bis 30 Gew.-Teile C,
1 bis 18 Gew.-Teile D,
1 bis 25 Gew.-Teile E,
0,15 bis 1 Gew.-Teile F.

4. Formmassen gemäß Anspruch 1 bis 3, enthaltend 2 bis 25 Gew.-Teile C.

5. Formmassen gemäß der Ansprüche 1 bis 4, enthaltend 5 bis 25 Gew.-Teile D.

6. Formmassen gemäß der vorhergehenden Ansprüche, wobei Vinylmonomere B.1 Gemische sind aus
B.1.1 50 bis 99 Gew.-Teilen Vinylaromaten und/oder kernsubstituierten Vinylaromaten und/oder Methacrylsäure-(C₁-C₈)-Alkylester und
B.1.2 1 bis 50 Gew.-Teilen Vinylcyanide und/oder (Meth)Acrylsäure-(C₁-C₈)-Alkylester und/oder Derivate ungesättigter Carbonsäuren.

7. Formmassen gemäß der vorhergehender Ansprüche, wobei die Pfropfgrundlage ausgewählt ist aus mindestens einem Kautschuk aus der Gruppe der Dienkautschuke, EP(D)M-Kautschuke, Acrylat-, Polyurethan-, Silikon-, Chloropren- und Ethylen/Vinylacetat-Kautschuk.

8. Formmassen gemäß der vorhergehenden Ansprüche, wobei Komponente D ausgewählt ist aus der Gruppe bestehend aus Propoxyphosphazen, Phenoxyphosphazen, Methylphenoxyphosphazen, Aminophosphazen und Fluoralkylphosphazene.

9. Formmassen gemäß der vorhergehenden Ansprüche, wobei Kompoente E aus wenigstens einer polaren Verbindung von einem oder mehreren Metallen der 1. bis 5. Hauptgruppe oder 1 bis 8. Nebengruppe des Periodensystems mit wenigstens einem Element ausgewählt aus Sauerstoff, Wasserstoff, Schwefel, Phosphor, Bor, Kohlenstoff, Stickstoff oder Silicium ausgewählt ist.

10. Formmassen gemäß Anspruch 9, wobei Komponente E aus wenigstens einer polaren Verbindung von einem oder mehreren Metallen der 2. bis 5. Hauptgruppe oder 4. bis 8. Nebengruppe mit wenigstens einem Element ausgewählt aus Sauerstoff, Wasserstoff, Schwefel, Phosphor, Bor, Kohlenstoff, Stickstoff oder Silicium ausgewählt ist.

11. Formmassen gemäß Anspruch 10, wobei Komponente E aus wenigstens einer polaren Verbinung von einem oder mehreren Metallen der 3. bis 5 Hauptgruppe oder 4. bis 8 Nebengruppe des Periodensystems mit wenigstens einem Element ausgewählt aus Sauerstoff, Wasserstoff, Schwefel, Phosphor, Bor, Kohlenstoff, Stickstoff oder Silicium ausgewählt ist.

12. Formmassen gemäß der vorhergehenden Ansprüche, wobei Komponente E ausgewählt ist aus mindestens einem Oxid, Hydroxid, wasserhaltigem Oxid, Sulfat, Sulfit, Sulfid, Carbonat, Carbid, Nitrat, Nitrit, Nitrid, Borat, Silikat, Phosphat, Hydrid, Phosphit und Phosphonat.

13. Formmassen gemäß der vorhergehenden Ansprüche, wobei Komponente E ausgewählt ist aus Oxiden, Phosphaten und Hydroxiden.

14. Formmassen gemäß der vorhergehenden Ansprüche, wobei Komponente E ausgewählt ist aus TiO₂, SiO₂, SnO₂, ZnO, ZnS, Böhmit, ZrO₂, Al₂O₃, Aluminiumphosphate, Eisenoxide, TiN, WC, AlO(OH), Sb₂O₃, Eisenoxide, Na₂SO₄, Vanadiunoxide, Zinkborat, Silicate wie Al-Silikate, Mg-Silikate, ein-, zwei-, dreidimensionale Silikate, deren Mischugnen und dotierte Verbindungen.

15. Formmassen gemäß der vorhergehenden Ansprüche, wobei Komponente E ausgewählt ist aus hydrathaltigen Aluminiumoxiden, TiO₂ und Mischungen davon.

16. Formmassen gemäß der vorhergehenden Ansprüche, enthaltend wenigstens ein Additiv ausgewählt aus der Gruppe der Gleit- und Entformungsmittel, Nukleiermittel, Antistatika, Stabilisatoren, Farbstoffe und Pigmente.

17. Formmassen gemäß der vorhergehenden Ansprüche, enthaltend weitere Flammschutzmittel, welche verschieden sind von Komponente D.

18. Verfahren zur Herstellung von Formmassen gemäß Anspruch 1, wobei die Komponenten A bis E und gegebenenfalls weiteren Zusätzen vermischt und schmelzcompoundiert werden.

19. Verwendung der Formmassen gemäß Anspruch 1 zur Herstellung von Formkörpern.

20. Formkörper, hergestellt aus Formmassen gemäß der Ansprüche 1 bis 17.

21. Gehäuseteile gemäß Anspruch 20.

## Claims

1. Thermoplastic moulding compositions containing polycarbonate and/or polyester carbonate, graft polymer, phosphazenes and inorganic powder having an average particle diameter of less than or equal to 200 nm.

2. Thermoplastic moulding compositions according to claim 1 containing
A) 40 to 99 parts by weight of aromatic polycarbonate and/or polyester carbonate
B) 0.5 to 60 parts by weight of graft polymer of
B.1) 5 to 95 wt.% of one or more vinyl monomers on
B.2) 95 to 5 wt.% of one or more grafting backbones having a glass transition temperature of <10□C,
C) 0 to 45 parts by weight of at least one thermoplastic polymer selected from the group comprising vinyl (co)polymers and polyalkylene terephthalates,
D) 0.1 to 50 parts by weight of at least one component selected from the group comprising phosphazenes of the formulae 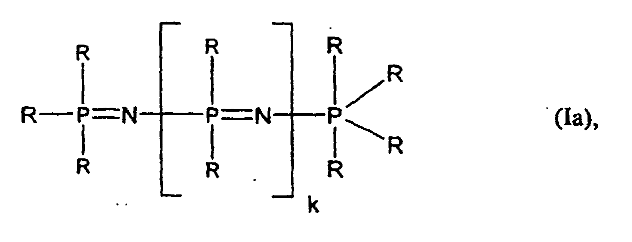 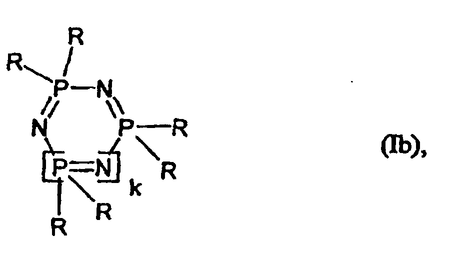 in which
R is in each case identical or different and denotes amino, C₁ to C₈ alkyl, in each case optionally halogenated, or C₁ to C₈ alkoxy, C₅ to C₆ cycloalkyl, C₆ to C₂₀ aryl, phenoxy, naphthyloxy or C₇ to C₁₂ aralkyl, in each case optionally substituted by alkyl and/or halogen,
k denotes 0 or a number from 1 to 15,
E) 0.5 to 40 parts by weight of finely divided inorganic powder having an average particle diameter of less than or equal to 200 nm and
F) 0 to 5 parts by weight of fluorinated polyolefin.

3. Moulding compositions according to claims 1 and 2 containing
60 to 98.5 parts by weight of A,
1 to 40 parts by weight of B,
0 to 30 parts by weight of C,
1 to 18 parts by weight of D,
1 to 25 parts by weight of E,
0.15 to 1 part by weight of F.

4. Moulding compositions according to claims 1 to 3 containing 2 to 25 parts by weight of C.

5. Moulding compositions according to claims 1 to 4 containing 5 to 25 parts by weight of D.

6. Moulding compositions according to the preceding claims, wherein vinyl monomers B.1 are mixtures prepared from
B.1.1 50 to 99 parts by weight of vinyl aromatics and/or ring-substituted vinyl aromatics and/or methacrylic acid (C₁-C₈)-alkyl esters and
B.1.2 1 to 50 parts by weight of vinyl cyanides and/or (meth)acrylic acid (C₁-C₈)-alkyl esters and/or derivatives of unsaturated carboxylic acids.

7. Moulding compositions according to the preceding claims, wherein the grafting backbone is selected from at least one rubber from the group comprising diene rubbers, EP(D)M rubbers, acrylate, polyurethane, silicone, chloroprene and ethylene/vinyl acetate rubbers.

8. Moulding compositions according to the preceding claims, wherein component D is selected from the group consisting of propoxyphosphazene, phenoxyphosphazene, methylphenoxyphosphazene, aminophosphazene and fluoroalkylphosphazenes.

9. Moulding compositions according to the preceding claims, wherein component E is selected from among at least one polar compound of one or more metals of main groups 1 to 5 or subgroups 1 to 8 of the periodic system with at least one element selected from among oxygen, hydrogen, sulfur, phosphorus, boron, carbon, nitrogen or silicon.

10. Moulding compositions according to claim 9, wherein component E is selected from among at least one polar compound of one or more metals of main groups 2 to 5 or subgroups 4 to 8 of the periodic system with at least one element selected from among oxygen, hydrogen, sulfur, phosphorus, boron, carbon, nitrogen or silicon.

11. Moulding compositions according to claim 10, wherein component E is selected from among at least one polar compound of one or more metals of main groups 3 to 5 or subgroups 4 to 8 of the periodic system with at least one element selected from among oxygen, hydrogen, sulfur, phosphorus, boron, carbon, nitrogen or silicon.

12. Moulding compositions according to the preceding claims, wherein component E is selected from among at least one oxide, hydroxide, hydrous oxide, sulfate, sulfite, sulfide, carbonate, carbide, nitrate, nitrite, nitride, borate, silicate, phosphate, hydride, phosphite and phosphonate.

13. Moulding compositions according to the preceding claims, wherein component E is selected from among oxides, phosphates and hydroxides.

14. Moulding compositions according to the preceding claims, wherein component E is selected from among TiO₂, SiO₂, SnO₂, ZnO, ZnS, boehmite, ZrO₂, Al₂O₃, aluminium phosphates, iron oxides, TiN, WC, AlO(OH), Sb₂O₃, iron oxides, Na₂SO₄, vanadium oxides, zinc borate, silicates such as Al silicates, Mg silicates, 1-, 2- or 3-dimensional silicates, mixtures thereof and doped compounds.

15. Moulding compositions according to the preceding claims, wherein component E is selected from among hydrated aluminium oxides, TiO₂ and mixtures thereof.

16. Moulding compositions according to the preceding claims containing at least one additive selected from the group comprising lubricants and mould release agents, nucleating agents, antistatic agents, stabilisers, dyes and pigments.

17. Moulding compositions according to the preceding claims containing further flame retardants which differ from component D.

18. Process for the production of moulding compositions according to claim 1, wherein components A to E and optionally further additives are mixed and melt-compounded.

19. Use of the moulding compositions according to claim 1 for the production of mouldings.

20. Mouldings produced from moulding compositions according to claims 1 to 17.

21. Casing parts according to claim 20.

## Revendications

1. Matières à mouler thermoplastiques contenant un polycarbonate et/ou polyester-carbonate, un polymère greffé, des phosphazènes et une poudre minérale à un diamètre de particule moyen inférieur à 200 nm.

2. Matières à mouler thermoplastiques selon la revendication 1, contenant
A) 40 à 99 parties en poids d'un polycarbonate et/ou polyester-carbonate aromatique,
B) 0,5 à 60 parties en poids d'un polymère greffé de
B.1) 5 à 95 % en poids d'un ou plusieurs monomères vinyliques sur
B.2) 95 à 5 % en poids d'un ou plusieurs supports de greffage ayant une température de transition du second ordre inférieure à 10°C,
C) 0 à 45 parties en poids d'au moins un polymère thermoplastique choisi dans le groupe des (co)polymères vinyliques et des téréphtalates de polyalkylène,
D) 0,1 à 50 parties en poids d'au moins un composant choisi dans le groupe des phosphazènes de formules 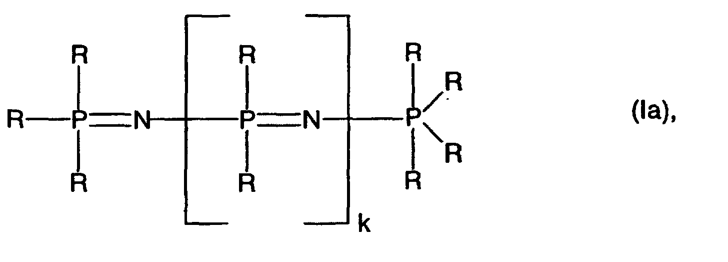 dans lesquelles
les symboles R, ayant des significations identiques ou différentes, représentent chacun un groupe amino, un groupe alkyle en C₁-C₈ ou alcoxy en C₁-C₈, chacun d'eux éventuellement 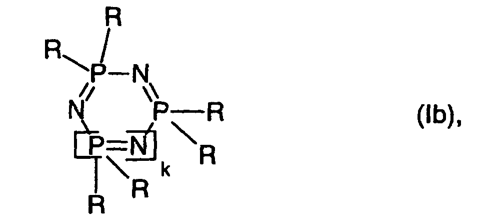 halogéné, un groupe cycloalkyle en C₅-C₆, aryle en C₆-C₂₀, phénoxy, naphtyloxy ou aralkyle en C₇-C₁₂, chacun d'eux portant éventuellement des substituants alkyle et/ou halogéno,
k est égal à 0 ou représente un nombre allant de 1 à 15,
E) 0,5 à 40 parties en poids d'une poudre minérale en fines particules, à un diamètre de particule moyen inférieur à 200 nm, et
F) 0 à 5 parties en poids d'une polyoléfine fluorée.

3. Matières à mouler selon les revendications 1 et 2 contenant
60 à 98,5 parties en poids de A,
1 à 40 parties en poids de B,
0 à 30 parties en poids de C,
1 à 18 parties en poids de D,
1 à 25 parties en poids de E,
0,15 à 1 partie en poids de F.

4. Matières à mouler selon les revendications 1 à 3, contenant 2 à 25 parties en poids de C.

5. Matières à mouler selon les revendications 1 à 4, contenant 5 à 25 parties en poids de D.

6. Matières à mouler selon les revendications précédentes, dans lesquelles les monomères vinyliques B.1 sont des mélanges de
B.1.1 50 à 99 parties en poids de dérivés vinylaromatiques et/ou de dérivés vinylaromatiques substitués dans les noyaux et/ou de méthacrylates d'alkyle en C₁-C₈, et
B.1.2 1 à 50 parties en poids de cyanures de vinyle et/ou de (méth)acrylates d'alkyle en C₁-C₈ et/ou de dérivés d'acides carboxyliques insaturés.

7. Matières à mouler selon les revendications qui précèdent dans lesquelles le support de greffage est choisi parmi au moins un caoutchouc du groupe des caoutchoucs diéniques, des caoutchoucs EP(D)M, des caoutchoucs d'acrylates, de polyuréthannes, de silicones, de chloroprène et des caoutchoucs éthylène/acétate de vinyle.

8. Matières à mouler selon les revendications qui précèdent dans lesquelles le composant D est choisi dans le groupe consistant en le propoxyphosphazène, le phénoxyphosphazène, le méthylphénoxyphosphazène, l'aminophosphazène et les fluoralkylphosphazènes.

9. Matières à mouler selon les revendications qui précèdent dans lesquelles le composant E est choisi parmi au moins un dérivé polaire d'un ou plusieurs métaux du 1^{er} au 5^{ème} groupe principal ou du 1^{er} au 8^{ème} sous-groupe de la classification périodique et d'au moins un élément choisi parmi l'oxygène, l'hydrogène, le soufre, le phosphore, le bore, le carbone, l'azote ou le silicium.

10. Matières à mouler selon la revendication 9, dans lesquelles le composant E est choisi parmi au moins un dérivé polaire d'un ou plusieurs métaux du 2^{ème} au 5^{ème} groupe principal ou du 4^{ème} au 8^{ème} sous-groupe et d'au moins un élément choisi parmi l'oxygène, l'hydrogène, le soufre, le phosphore, le bore, le carbone, l'azote ou le silicium.

11. Matières à mouler selon la revendication 10, dans lesquelles le composant E est choisi parmi au moins un dérivé polaire d'un ou plusieurs métaux du 3^{ème} au 5^{ème} groupe principal ou du 4^{ème} au 8^{ème} sous-groupe de la classification périodique et d'au moins un élément choisi parmi l'oxygène, l'hydrogène, le soufre, le phosphore, le bore, le carbone, l'azote ou le silicium.

12. Matières à mouler selon les revendications qui précèdent, dans lesquelles le composant E est choisi parmi au moins un oxyde, un hydroxyde, un oxyde hydraté, un sulfate, un sulfite, un sulfure, un carbonate, un carbure, un nitrate, un nitrite, un nitrure, un borate, un silicate, un phosphate, un hydrure, un phosphite ou un phosphonate.

13. Matières à mouler selon les revendications qui précèdent dans lesquelles le composant E est choisi parmi les oxydes, les phosphates et les hydroxydes.

14. Matières à mouler selon les revendications qui précèdent dans lesquelles le composant E est choisi parmi TiO₂, SiO₂, SnO₂, ZnO, ZnS, la bohémite, ZrO₂, Al₂O₃, les phosphates d'aluminium, les oxydes de fer, TiN, WC, AIO(OH), Sb₂O₃, les oxydes de fer, Na₂SO₄, les oxydes du vanadium, le borate de zinc, les silicates tels que les silicates d'Al, les silicates de Mg, les silicates mono-, di-, tri-dimensionnels, leurs mélanges et les dérivés dopés.

15. Matières à mouler selon les revendications qui précèdent, dans lesquelles le composant E est choisi parmi les alumines contenant des hydrates, TiO₂ et leurs mélanges.

16. Matières à mouler selon les revendications qui précèdent, contenant au moins un additif choisi dans le groupe des agents lubrifiants et des agents de démoulage, des agents de nucléation, des agents antistatiques, des stabilisants, des colorants et pigments.

17. Matières à mouler selon les revendications qui précèdent, contenant d'autres agents ignifugeants, différant du composant D.

18. Procédé pour la préparation des matières à mouler selon la revendication 1, selon lequel on mélange et on malaxe à l'état fondu les composants A à E et, le cas échéant, les autres additifs.

19. Utilisation des matières à mouler selon la revendication 1 pour la fabrication d'objets moulés.

20. Objets moulés fabriqués à partir des matières à mouler selon les revendications 1 à 17.

21. Pièces de logements selon la revendication 20.
